# EUROPÄISCHE PATENTANMELDUNG

(11) **EP 3 949 761 A1**
(43) Veröffentlichungstag der Anmeldung: **09.02.2022**
(21) Anmeldenummer: 20189450.8
(22) Anmeldetag: 04.08.2020
(51) Int. Cl.: A23L 35/00, A21D 13/00, A21D 13/31, A21D 13/38, A21D 15/02, A23D 7/005, A23L 27/00

(54) **MIT EINER EMULSION AUS PFLANZLICHEN SPEISEÖLEN UND WÜRZMITTELN GEFÜLLTE BACKWARE**

(71) Anmelder: MEGGLE Group GmbH, 83512 Wasserburg am Inn (DE)
(72) Erfinder: SALZER, Frank, 83533 Edling (DE)
(74) Vertreter: Böhm, Brigitte

(57) **Zusammenfassung**

Die vorliegende Erfindung betrifft gefüllte Backwaren, welche als Convenience-Produkt für die gekühlte Lagerung ausgestaltet sind, sowie vegane Ölin-Wasser-Emulsionen enthaltend Kräuter und/oder Gewürze zur Füllung derartiger Backwaren.

## Beschreibung

Die vorliegende Erfindung betrifft gefüllte Backwaren, welche als Convenience-Produkt für die gekühlte Lagerung ausgestaltet sind.

Brotprodukte werden häufig in tiefgekühlter, gekühlter oder ungekühlter Form als Convenience-Produkt zum Fertigbacken im heimischen Ofen ausgestaltet. Insbesondere mit Kräuterbutter gefüllte vorgebackene Baguettes werden in der Kühlung der Lebensmittelläden angeboten und erfreuen sich großer Beliebtheit. Beim Konsumenten zuhause in wenigen Minuten auf- oder fertiggebacken, ergeben diese Produkte frische und würzige Brote, welche vom Verbraucher als Beilagen zu vielen Speisen und insbesondere auch zu Gegrilltem sehr geschätzt werden. Aufgrund der eingeschränkten Haltbarkeit der in solchen Kräuterbutter-Baguettes enthaltenen Füllungen müssen die Produkte gekühlt gelagert werden. Die Produkte sind in der Regel luftdicht und häufig auch unter Schutzgasatmosphäre verpackt, um eine optimale Haltbarkeit gewährleisten zu können.

Aus gesundheitlichen oder auch geschmacklichen Gründen wäre es wünschenswert, derartige Produkte ohne Verwendung von Butter erzeugen zu können, gleichzeitig jedoch ein geschmacklich und ästhetisch äquivalentes Produkt bereitzustellen. Das Servieren von Brot mit einem Schälchen Olivenöl ist in Lokalen eine beliebte Alternative oder eine Ergänzung für Butter. Gerade eine Füllung eines Brotes analog zur Kräuterbutter erfordert aber eine gleichmäßige Verteilung der Kräuter oder anderer Geschmacksstoffe. Dies ist bei Verwendung eines Öls mit entsprechender Kräuter- oder Gewürzzugabe nicht möglich. Auch die Einbringung von pastösen Saucen, wie z.B. verschiedenen Pesto-Arten, oder von Tapenade, die jeweils Olivenöl als Fettkomponente enthalten, in entsprechende Brotprodukte führt bisher nicht zu befriedigenden Ergebnissen. Der vorliegenden Erfindung liegt daher die Aufgabe zugrunde, ein Convenience-Brotprodukt bereitzustellen, welches eine Füllung auf Basis von pflanzlichen Ölen enthält, aber dennoch eine ähnliche Anmutung und Gestaltung wie ein Kräuterbutter- oder Knoblauchbutter-Baguette der bekannten Art aufweist.

Diese Aufgabe wird im Rahmen der vorliegenden Erfindung gelöst durch die Bereitstellung einer gefüllten Backware, welche als Convenience-Produkt für die gekühlte Lagerung ausgestaltet ist und deren Füllung auf Basis von pflanzlichen Speiseölen realisiert wurde. Erhältlich ist ein solches Produkt durch Einbringen einer Emulsion, welche ein oder mehrere Arten von pflanzlichen Speiseölen, Wasser sowie Würzmittel umfasst, in ein zumindest teilweise gebackenes Brotprodukt. Diese Emulsion wird als Füllung in geeignete Einschnitte des Brotprodukts eingebracht oder in ein nicht eingeschnittenes Brotprodukt mit Hilfe geeigneter Vorrichtungen eingespritzt. Anschließend erfolgt das Verpacken der so hergestellten Backware.

Der Begriff Brotprodukt kennzeichnet im Rahmen der vorliegenden Erfindung eine Zubereitung auf Grundlage eines Teigs, der gemahlenes Getreide, Wasser und Triebmittel umfasst. Das Triebmittel dient der Lockerung des Teigs und erzeugt beim Backen die Poren in der Krume des Brotes. Im Rahmen der Erfindung wird hierzu Hefe oder Sauerteig oder eine Mischung derselben eingesetzt. Obwohl es angezeigt sein kann, kleinere Mengen eines anderen oder zusätzlichen Triebmittels zu verwenden, enthält der Teig in einer besonders bevorzugten Ausführungsform der Erfindung lediglich Hefe oder Sauerteig (ggf. in Form von Anstellgut). Beide können entweder in frischer Form oder in länger haltbarer Form eingesetzt werden, insbesondere getrocknet bzw. gefriergetrocknet.

Das Getreide, welches zur Herstellung des Brotteigs verwendet wird, kann beliebig gewählt werden; meist und bevorzugt werden Weizen, Dinkel und/oder Roggen eingesetzt und der Ausmahlungsgrad nach der gewünschten Brotart gewählt. Beispielsweise zur Herstellung von glutenfreien Backwaren können jedoch auch andere Getreide oder Mehlgrundstoffe verwendet werden, welche dem Fachmann für derartige Zwecke bekannt sind.

Der Teig des Brotprodukts kann neben den Komponenten Getreide, Wasser und Triebmittel andere Inhaltsstoffe umfassen. Die charakteristischen Eigenschaften eines Brotteigs und Brotprodukts müssen dabei erhalten bleiben. Zum Beispiel können dem Brot je nach gewünschter Geschmacksrichtung der Backware weitere Zutaten wie etwa Kürbiskerne, Sonnenblumenkerne, Nüsse oder bekannte Bestandteile, wie etwa Peperoni, Oliven, Röstzwiebeln, Kartoffeln, getrocknete Tomaten zugegeben werden.

Im Gegensatz zu einem Kuchenteig enthält der Brotteig der vorliegenden Erfindung allerdings Substanzen wie Zucker, Eier oder Fett gar nicht, oder nur in geringen Mengen als Geschmacksstoffe oder Geschmacksträger. Diese Substanzen werden für den Teig und das Brotprodukt nicht als Konsistenz- oder Strukturgeber benötigt oder eingesetzt. Im Rahmen der vorliegenden Erfindung enthält der Teig höchstens 10 Gew.-% Zucker, höchstens 10. Gew.-% Fett und höchstens 10 Gew.-% weitere Zutaten wie Ei oder andere Substanzen bezogen auf die Menge an Getreideerzeugnissen.

Überraschenderweise hat sich im Rahmen der vorliegenden Entwicklung gezeigt, dass es möglich ist, aus pflanzlichen Speiseölen und Würzmitteln in Gegenwart geeigneter Mengen an Wasser stabile Emulsionen herzustellen, welche mindestens für eine vom Produktionszyklus vorgegebene Zeit ohne erkennbare Phasentrennung lagerstabil sind und sich als Füllung für Brotprodukte der oben beschriebenen Art eignen. Weiter können derartige Emulsionen vorteilhaft auch durch die verwendeten Produktionsapparaturen automatisiert in das Brotprodukt eingefüllt werden, sei es durch Einfüllung in vorgefertigte Schnitte oder durch Einspritzen über eine geeignete Einspritzvorrichtung in ein nicht-geschnittenes Brotprodukt.

Aufgrund der Konsistenz der erfindungsgemäßen Emulsion werden die enthaltenen Würzmittel, also Kräuter, Gewürze, Knoblauch oder dergleichen sehr gleichmäßig im Brotprodukt verteilt. Diese gleichmäßige Verteilung bleibt auch bestehen, obwohl im Laufe der Lagerung der gefüllten Backware, spätestens jedoch beim Fertigbacken/Aufbacken der Backware, gewisse Anteile der Emulsion an Speiseöl oder/und Wasser in das Brotprodukt aufgenommen werden. Letztlich wird dabei ein Produkt erzeugt, welches ähnlich wie schon bei dem bekannten Kräuterbutter-Baguette eine durch die Öl-/Fett- und Wasser-Anteile befeuchtete Krume und gleichmäßig verteilte Würzmittel aufweist. Je nach Menge der eingebrachten Emulsion bleibt diese auch teilweise in dieser Form im fertiggebackenen Endprodukt bestehen. Die erfindungsgemäßen Backwaren können nach dem Fertig-/Aufbacken und Portionieren aber auch einem mit Öl, insbesondere Olivenöl beträufeltem Brot ähneln, auf oder in welchem die Kräutermischung gleichmäßig verteilt ist.

Die in der Emulsion enthaltenen Würzmittel umfassen vorzugsweise Kräuter oder/und Gewürze und ergeben damit ein pikantes Produkt. Auch Säuerungsmittel sowie Aromen, bevorzugt natürliche Aromen, können in der Emulsion zur Abrundung des Geschmacks vorhanden sein.

Die Emulsion wird erhalten durch geeignetes Mischen der einzelnen Komponenten Speiseöl, Wasser und Würzmittel. Bevorzugt werden dabei die pflanzlichen Speiseöle in Mengen von 60 bis 80 Gew.-%, die Würzmittel in einer Menge von 20 bis 40 Gew.-% eingesetzt.

Die Würzmittel werden erfindungsgemäß bevorzugt in Form einer Kräuter- oder/und Gewürz-Vormischung, welche einen Wassergehalt von 50 bis 90 Gew.-%, vorzugsweise 60 bis 85 Gew.-% aufweist, eingesetzt. Die in der Emulsion vorhandene Menge an Wasser wird dabei besonders bevorzugt vollständig durch die Kräuter- oder/und Gewürz-Vormischung eingebracht, die wiederum bevorzugt erhalten wird durch Vermischen von Wasser, Kräutern oder/und Gewürzen und einem Bindemittel.

Als Bindemittel hat sich hierbei insbesondere Stärke bewährt, welche für eine gleichmäßige Verteilung der einzelnen Komponenten im Gesamtvolumen der Vormischung sorgt. Andere geeignete Bindemittel sind dem Fachmann bekannt und können ebenfalls vorteilhaft eingesetzt werden. Die Kräuter- oder/und Gewürzvormischung wird bevorzugt durch Erwärmen der Mischung auf 72 bis 96°C, mehr bevorzugt auf 75 bis 85°C pasteurisiert. Durch die Pasteurisierung der Vormischung wird diese mikrobiologisch stabilisiert, und die hieraus erhaltene Zubereitung verfügt entsprechend über eine ausgezeichnete Haltbarkeit, so dass auch die erfindungsgemäße gefüllte Backware eine hohe Stabilität und lange Haltbarkeit aufweist. Außerdem dickt die Stärke bei diesen Temperaturen an, was für die optimale Stabilisierung der Vormischung vorteilhaft ist.

Bei der folgenden Herstellung der Emulsion ist es außerdem bevorzugt, in die Kräuter- oder/und Gewürzvormischung zuerst eine emulgierende modifizierte Stärke zuzugeben und anschließend langsam unter intensivem Rühren das oder die pflanzlichen Speiseöle zuzudosieren. Besonders bevorzugt wird eine eine physikalisch oder enzymatisch modifizierte Stärke eingesetzt. Hierbei ist es wiederum besonders bevorzugt, eine emulgierend, aber nicht verdickend wirkende Stärke einzusetzen. Derartige Produkte sind dem Fachmann bekannt und auf dem Markt verfügbar, z.B. N-Creamer 2111 der Firma Ingredion.

Die Herstellung der Emulsion erfolgt dabei üblicherweise bei Raumtemperatur oder bei einer solchen hiervon abweichenden Temperatur, welche abhängig von den verwendeten Inhaltsstoffen die Bildung einer stabilen Emulsion erlaubt.

Auch die Zugabe eines Emulgators kann bei der Herstellung der Emulsion wünschenswert sein. Mit der oben beschriebenen Herstellungsmethode kann aber eine stabile Emulsion auch ohne Einsatz von Emulgatoren erhalten werden, was einer bevorzugten Ausgestaltung der Erfindung entspricht.

In weiteren bevorzugten Ausführungsformen der vorliegenden Erfindung wird die Emulsion unter Verwendung der pflanzlichen Speiseöle Rapsöl, Distelöl, Sonnenblumenöl, Sojaöl oder/und Olivenöl erzeugt. Die Verwendung von heimischen Ölen oder jedenfalls von Ölen aus Pflanzen, deren Anbau in Deutschland bzw. Europa möglich ist, ist gerade unter dem Gesichtspunkt der Nachhaltigkeit und Umweltfreundlichkeit bevorzugt. Die verwendeten Speiseöle bzw. eine geeignete Mischung derselben werden so ausgewählt, dass sich das gewünschte geschmackliche Ergebnis erzielen lässt. Um eine mediterrane Charakteristik der gefüllten Backware zu erzielen, wird vorzugsweise eine Mischung von einem oder mehreren geschmacksneutralen Speiseölen, insbesondere von Rapsöl, mit nativem Olivenöl eingesetzt. Dabei ist das Mischungsverhältnis des geschmacksneutralen Speiseöls und insbesondere des Rapsöls mit nativem Olivenöl vorzugsweise im Bereich von 10:1 bis 1:1 eingestellt.

Je nach gewünschter Geschmacksrichtung der gefüllten Backware können auch andere Öle eingesetzt werden, welche selbst einen Beitrag für den geschmacklichen Gesamteindruck der gefüllten Backware leisten. Hierbei ist insbesondere an Leinöl, Walnussöl oder Kürbiskernöl zu denken, welche anstelle des Olivenöls, jedoch auch zusätzlich hierzu eingesetzt und mit geschmacksneutralen Speiseölen in geeigneten Verhältnissen gemischt werden können. Auch bereits aromatisierte Öle können im Rahmen der vorliegenden Erfindung als Bestandteil der eingesetzten pflanzlichen Speiseöle verwendet werden.

Als Würzmittel für die Füllung der erfindungsgemäßen Backware werden in die Emulsion vorzugsweise Küchenkräuter, Gewürze, Säuerungsmittel und/oder weitere Würzmittel eingebracht. Als Küchenkräuter seien beispielhaft Bärlauch, Basilikum, Beifuß, Bohnenkraut, Borretsch, Brunnenkresse, Dill, Estragon, Kerbel, Koriander, Kresse, Liebstöckel, Majoran, Melisse, Minze, Oregano, Petersilie, Pimpinelle, Rosmarin, Salbei, Sauerampfer, Schnittlauch, Thymian oder Ysop genannt. Diese Kräuter können einzeln oder in Mischung eingesetzt werden, und auch weitere hier nicht genannte Kräuter können einzeln oder in Mischung in der Emulsion als Würzmittel vorhanden sein.

Geschmacklich, jedoch auch für die Haltbarkeit und mikrobiologische Stabilität der Emulsion und der damit gefüllten Backware vorteilhaft ist die Zugabe von Würzmitteln wie Knoblauch und/oder Zwiebel zu der Emulsion. Gerade Knoblauch hat sich für die Würzung entsprechender Backwaren sehr bewährt, so dass auch die Herstellung einer Emulsion lediglich unter Verwendung von Knoblauch und gegebenenfalls noch Gewürzen und insbesondere Salz eine bevorzugte Ausführungsform der vorliegenden Erfindung ist. Mehr bevorzugt ist allerdings die Verwendung von Knoblauch in Kombination mit einer Auswahl der oben genannten Küchenkräuter und gegebenenfalls Gewürze, wobei je nach gewünschtem Geschmackseindruck ausgewählte Mischungen eingesetzt werden. Gerade für eine mediterrane Geschmacksrichtung ist eine Kombination von Knoblauch mit Basilikum, Oregano, Rosmarin und Thymian eine gute Basis, die durch weitere Gewürze oder Kräuter ergänzt werden kann. Auch der Zusatz von Zwiebel führt zu einem geschmacklich hochwertigen Produkt und auch hierbei ist eine Kombination mit Küchenkräutern und weiteren Gewürzen oder auch mit Säuerungsmitteln besonders vorteilhaft zur Erreichung eines ausgezeichneten geschmacklichen Ergebnisses.

Bei der Herstellung der Emulsion bzw. der Kräuter- oder/und Gewürzvormischung können die frischen Bestandteile umfassend Küchenkräuter, Knoblauch oder/und Zwiebel direkt, also in frischer Form, eingesetzt werden. Alternativ ist es jedoch auch möglich, diese Substanzen in tiefgekühlter Form, in gefriergetrockneter oder in getrockneter Form einzusetzen. Die Verwendung als Paste, als Pulver oder als Granulat ist dabei ebenfalls vorteilhaft, insbesondere im Hinblick auf die leichte Dosierbarkeit.

Die weiteren bevorzugt in einer erfindungsgemäß eingesetzten Emulsion vorhandenen Würzmittel umfassen Gewürze oder/und Säuerungsmittel und gegebenenfalls auch Aromen, vorzugsweise natürliche Aromen. Bei den Gewürzen ist die Verwendung von Salz, Pfeffer, Paprika, Kümmel, Chilis, Kurkuma, Ingwer, Cayennepfeffer, Muskat, Kardamom, Kreuzkümmel und Piment bevorzugt, jedoch können je nach gewünschter Geschmacksrichtung auch andere oder weitere Gewürze alleine oder in Kombination eingesetzt werden.

Als Säuerungsmittel, welches ebenfalls vorteilhaft im Rahmen der vorliegenden Erfindung eingesetzt werden kann, ist beispielsweise Milchsäure oder Citronensäure in Form von Zitronensaft, Zitronensaftkonzentrat oder Citronensäurepulver zu nennen. Auch Einsatz geringer Mengen an Essig/Essigsäure zur Abrundung kann geschmacklich vorteilhaft sein.

Während bei Produkten, für die eine lange Haltbarkeit erreicht werden soll, häufig Konservierungsstoffe eingesetzt werden und ein solcher Einsatz auch für die erfindungsgemäße gefüllte Backware möglich ist, sind bevorzugt keine Konservierungsstoffe in der Emulsion und besonders bevorzugt auch im gesamten Produkt enthalten. Gerade bei Verwendung der oben näher beschriebenen pasteurisierten Kräuter- und/oder Gewürzvormischung, und insbesondere auch bei Einsatz entsprechender Würzmittel wie Knoblauch, Zwiebeln oder Salz, welche zusätzliche positive Wirkung auf die Haltbarkeit der Emulsion bzw. des Produkts aufweisen, hat sich gezeigt, dass auf den Einsatz von Konservierungsmitteln vollständig verzichtet werden kann und dennoch die für solche Produkte geforderte Lagerfähigkeit von mindestens 53 Tagen problemlos eingehalten werden kann.

Es hat sich im Rahmen der vorliegenden Erfindung gezeigt, dass die Einstellung verschiedener Eigenschaften, wie des A_{w}-Werts, insbesondere < 0,98, die Zugabe von geeigneten Mengen Salz, insbesondere eine Menge von 8 +/-3 Gew.-%, und/oder von konservierend wirkenden ätherischen Ölen aus Kräutern und anderen Würzmitteln, vor allem Zwiebel und Knoblauch, für eine hervorragende mikrobiologische Stabilität der Kräuter- und/oder Gewürzvormischung, aber auch der daraus hergestellten Emulsion sorgen. Die Wirksamkeit der Kombination dieser Eigenschaften wird in Lager- und Challenge-Tests überprüft und ggf. angepasst. Die Vormischung kann gekühlt oder gefroren über längere Zeit gelagert werden und dann z.B. in der Bäckerei direkt unter Zugabe von modifizierter Stärke und des Öls in einem geeigneten Mischer zur Emulsion verarbeitet werden. Es hat sich hierbei als weiterer Vorteil der Erfindung gezeigt, dass die Temperatur der einzelnen Komponenten während der Herstellung relativ unkritisch ist. Es kann daher z.B. eine gekühlte Vormischung vorgelegt und in diese das Öl unter stetigem Rühren unter Bildung der Emulsion eingearbeitet werden. Die Verwendung der Komponenten bei Raumtemperatur oder bei in Backstuben häufig erhöhten Temperaturen ist gleichfalls möglich.

Die Form der erfindungsgemäßen gefüllten Backware kann prinzipiell frei gewählt werden. Allerdings erscheint es wesentlich, dass ein entsprechendes Brotprodukt eine gewisse Mindestdicke und -länge aufweist, so dass eine Füllung sinnvoll in dieses Produkt eingebracht werden kann. Es ist daher erfindungsgemäß bevorzugt, das Brotprodukt als Ciabatta, Baguette, Stangenweißbrot oder, in einzelne Segmente getrennt bzw. in geeigneter Form unterteilt, als Reihensemmeln auszugestalten. Selbstverständlich können auch ähnlich geformte Produkte aus dunklem Teig eingesetzt werden. Nicht geeignet erscheinen dagegen sehr flache Backwaren wie Pizzateige oder sehr flache Fladenbrote, welche kein ausreichendes Krumenvolumen für eine Füllung aufweisen. Auch Brotprodukte in Form von schmalen Stangen wie Grissini oder Salzstangen eignen sich nicht oder höchstens bedingt als Brotbestandteil der erfindungsgemäßen Backware. Dagegen können die gefüllten Backwaren auch mit verschiedensten Dekoren versehen sein oder auch als Laugenprodukt angeboten werden.

Die erfindungsgemäße gefüllte Backware wird dem Verbraucher verpackt zur Verfügung gestellt, wobei die Verpackung insbesondere luftdicht ausgestaltet ist. Dabei wird die gefüllte Backware unter Vakuum oder, bevorzugt, unter Schutzgasatmosphäre in die Verpackung eingebracht.

Wie bereits oben erwähnt, sind die erfindungsgemäßen Backwaren als Convenience-Produkt ausgestaltet, welches für eine gekühlte Lagerung konzipiert ist. Die Lagerungs- und Darbietungsbedingungen in der Kühlung sowohl im Handel als auch beim Verbraucher zu Hause umfassen insbesondere einen Temperaturbereich von 0 bis 10°C, bevorzugt +4 bis +10°C. Gerade das erfindungsgemäß unter Schutzgasatmosphäre luftdicht verpackte Produkt ist für eine derartige Lagerung konzipiert. Unter diesen Bedingungen ist das Produkt lange haltbar, so dass eine Bevorratung auch einige Zeit vor dem tatsächlichen Gebrauch leicht möglich ist.

Die so hergestellte Backware kann auch tiefgefroren bevorratet werden und aufgetaut oder in gefrorenem Zustand aufgebacken werden.

In einer besonders bevorzugten Ausführungsform der vorliegenden Erfindung ist die gefüllte Backware, wie sie oben näher beschrieben ist, durch ein Verfahren erhältlich, welches folgende Schritte umfasst:
(a) Zubereitung eines Brotteiges,
(b) Formen des Brotteiges in die gewünschte Form,
(c) zumindest teilweises Backen des Brotteiges um ein Brotprodukt zu erhalten,
(d) Herstellen einer Öl-in-Wasser Emulsion aus ein oder mehreren pflanzlichen Speiseölen und einer Kräuter- oder/und Gewürz-Vormischung mit einem Wassergehalt von 50 bis 90 Gew,-.%, vorzugsweise 60 bis 85 Gew.-%, und einem Emulgator, vorzugsweise einer modifizierten Stärke ,
(e) Einbringen der Emulsion in Einschnitte im Brotprodukt oder Einspritzen der Emulsion, vorzugsweise an mehreren Stellen, in das Innere des Brotprodukts, und gegebenenfalls
(f) Verpacken der gefüllten Backware in einer vorzugsweise luftdichten Verpackung und
(g) Kühlen des verpackten Brotes.

Die einzelnen Herstellungsschritte (a) bis (c), (f) und (g) sind dem Fachmann geläufig und beispielsweise auch in DE 202008001271U1 bekannt. Die Herstellung der Emulsion unter Schritt (d) ist oben bereits ausführlich erläutert worden. Das Einbringen der Emulsion in das Brotprodukt erfolgt gemäß Schritt (e). Die erfindungsgemäße gefüllte Backware enthält danach die Emulsion als Füllung vorzugsweise an mehreren Stellen über das Brotprodukt verteilt, abhängig von der Länge des entsprechenden Produkts. Bei einzelnen Brotportionsstücken, wie Brötchen oder Semmeln, wird die Emulsion in einen einzigen Einschnitt eingebracht oder in das Brotprodukt mittig eingespritzt. Bei länglichen Brotprodukten wie den bevorzugten Ausgestaltungen als Ciabatta, Baguette oder auch bei Reihensemmeln werden über die Länge des Produkts vorzugsweise mehrere Einschnitte vorgenommen, über die es möglich ist, die Emulsion möglichst gleichmäßig in diesem Einschnitt zu verteilen. Hierzu wird der Einschnitt so ausgestaltet, dass das Brot noch genügend Zusammenhalt aufweist und in der gesamten Länge in Form dieses Produkts aufgebacken werden kann. Dabei sollte der Einschnitt vorzugsweise wiederum so ausgestaltet sein, dass die einzelnen Brotteile nicht auseinanderfallen oder stark auffächern und direkte Hitze in das Innere des Brotprodukts gelangt. Die Krume soll locker und saftig bleiben, dagegen die Kruste rösch und knusprig. Im Rahmen der Erfindung ist es aber auch möglich, ein zumindest teilweise vorgebackenes Brotprodukt längs und waagrecht ein- oder durchzuschneiden und die Emulsion auf die Schnittflächen aufzubringen. Das Produkt wird dann wieder in die ursprüngliche Form gebracht, indem es zugeklappt oder erhaltene Teile wieder aufeinandergelegt werden. Vor dem Verzehr kann auch ein solches Produkt einfach im Ofen auf- oder fertiggebacken werden, wobei das Produkt als Ganzes oder auch die Teile als solche entsprechend erhitzt werden.

Der Abstand einzelner Einschnitte voneinander hängt davon ab, wieviel Füllung im Verhältnis zum gesamten Brotprodukt eingebracht werden soll. Die Ausgestaltung ist hierbei dem Fachmann überlassen.

Ähnliches gilt für die Einbringung der Emulsion durch Einspritzen der Emulsion, welches vorzugsweise an mehreren Stellen des Brotprodukts erfolgt und die Emulsion in das Innere des Brotprodukts einbringt. Die erfindungsgemäß eingesetzte Emulsion weist eine solche Konsistenz auf, dass beim Einspritzen die dosierte Menge leicht von der Einspritzvorrichtung abreißt und damit ein sauberes Einbringen in das Innere des Brotprodukts ermöglicht wird.

Auch bei Einbringung der Füllung durch Einspritzen hängt der Abstand der einzelnen Einspritzpunkte von der gewünschten Ausgestaltung und dem Grad der Füllung des Produkts ab. Gleiches gilt für die jeweils eingebrachte Menge an Emulsion in das Brotprodukt, welche ebenfalls dem gewünschten Geschmacksergebnis angepasst werden kann.

Die erfindungsgemäße gefüllte Backware ist ein zeitgemäßes Produkt, welches dem Endkonsumenten erlaubt, in kürzester Zeit ein geschmacklich und ästhetisch ansprechendes Brotprodukt durch Aufbacken oder Fertigbacken im heimischen Ofen herzustellen. Die Backware weist eine knusprige Kruste auf sowie eine lockere Krume, welche durch die eingebrachte Füllung und die darin enthaltenen feuchten Bestandteile saftig wirkt und durch Kräuter, Knoblauch und Gewürze eine gute geschmackliche Begleitung für verschiedenste Speisen darstellt. Die Eigenschaften der zur Füllung verwendeten Emulsion, welche gemäß obiger Beschreibung erhältlich ist, ermöglichen es, exakte Mengen an Füllung in das Brotprodukt an den gewünschten Stellen einzubringen, und eine gleichmäßige Verteilung der Würzmittel im Brotprodukt zu erreichen. Die erfindungsgemäßen Produkte ermöglichen auch die Realisierung von Geschmacksrichtungen wie Pesto und Tapenade, was mit bekannten Produkten bisher nicht möglich war. Die erfindungsgemäße Emulsion erlaubt dagegen erstmals eine Herstellung von Pesto- und Tapenade-artigen Produkten in dressierbarer Form.

Durch die Verwendung von pflanzlichen Ölen und vor allem von Ölen, welche ohne lange Transportwege zur Verfügung stehen, sind die erfindungsgemäßen Produkte nachhaltig und physiologisch wertvoll, sie tragen auch dem Trend zur veganen Ernährung Rechnung.

Die erfindungsgemäß als Füllung verwendete Emulsion ist ein weiterer Gegenstand der vorliegenden Erfindung. Sie ist dadurch gekennzeichnet, dass sie mikrobiologisch stabil ist. Im Rahmen der vorliegenden Erfindung bedeutet "mikrobiologisch stabil", dass die Haltbarkeit bei 10°C ohne Konservierungsstoffe für mindestens 53 Tage gewährleistet ist.

Weiterhin ist die Emulsion der vorliegenden Erfindung dadurch gekennzeichnet, dass ihre Konsistenz stabil ist. Dies bedeutet, dass sie über mindestens 12 Stunden nach ihrer Herstellung dressierbar ist und somit eine Verwendung zur Herstellung von Brotprodukten über diese Zeit ohne Qualitätseinbußen möglich ist. Die erfindungsgemäße Emulsion hat sich aber trotz ihrer wenigen und ernährungsphysiologisch positiven Bestandteile bereits als über Tage und Wochen konsistenzstabil erwiesen. Abhängig vom Einsatzbereich kann eine weichere oder festere stabile Konsistenz durch Anpassung der Inhaltsstoffe und eventueller Zugabe von Hydrokolloiden erreicht werden.

Die erfindungsgemäße stabile Emulsion ist erhältlich durch Vermischen von 20 bis 40 Gew.-% einer Kräuter- oder/und Gewürzvormischung mit einem Wassergehalt von 50 bis 90 Gew.-%, vorzugsweise 60 bis 85 Gew.-%, welche wie oben beschrieben erzeugt wird, mit einer emulgierenden Menge einer emulgierenden modifizierten Stärke, wobei diese Vermischung in der Regel und bevorzugt bei Raumtemperatur erfolgt. In der Folge wird unter ständigem Rühren eine Menge von 60 bis 80 Gew.-% bezogen auf das Gesamtgewicht der Emulsion eines oder mehrerer pflanzlicher Speiseöle eingebracht.

Während es bevorzugt ist, die Kräuter- oder/und Gewürzvormischung mit der Stärke bei Raumtemperatur zu vermischen und in der Folge auch das Einrühren der Öle bei Raumtemperatur erfolgt, können diese Schritte auch bei Kühltemperaturen von 0 bis 15°C oder insbesondere 4 bis 10°C durchgeführt werden. Da die Temperatur im Raum und der einzelnen Zutaten für die erfolgreiche Herstellung der Emulsion relativ unkritisch ist, können auch unterschiedlich temperierte Zutaten eingesetzt werden und die Herstellung der Emulsion kann auch bei den relativ hohen Temperaturen eines Backbetriebs erfolgen.

Es ist bevorzugt, die emulgierende modifizierte Stärke zur Erzeugung der stabilen Emulsion in einer Menge von 0,3 bis 3 Gew.-%, insbesondere 0,5 bis 2,5 Gew.-% bezogen auf die Gesamtmenge der Emulsion einzusetzen. Insbesondere für eine dressierbare Emulsion hat sich eine Zugabe von emulgierender modifizierter Stärke von 0,6 bis 1,0 Gew.-% als gut geeignet erwiesen. Wie bereits oben ausgeführt, kann die stabile Emulsion als Würzmittel Küchenkräutern oder/und Knoblauch oder/und Zwiebeln oder/und Gewürze enthalten. Die bevorzugt einzusetzenden Küchenkräuter und Gewürze entsprechen denjenigen, welche bereits in Bezug auf die erfindungsgemäße gefüllte Backware aufgeführt wurden. Darüber hinaus kann die stabile Emulsion Säuerungsmittel oder/und Aromastoffe wie oben ausgeführt enthalten. Die zur Verwendung der Emulsion eingesetzte Kräuter- oder/und Gewürzvormischung enthält vorzugsweise Stärke in geeigneten Mengen als Bindemittel.

Die stabile Emulsion ist außerdem dadurch gekennzeichnet, dass sie als pflanzliche Öle bevorzugt Rapsöl, Distelöl, Sonnenblumenöl, Sojaöl oder/und Olivenöl umfasst, wobei vorzugsweise eine Mischung von einem oder mehreren geschmacksneutralen Ölen mit einem geschmacklich intensiveren Öl wie beispielsweise nativem Olivenöl eingesetzt wird. Wie oben bereits ausgeführt, können auch andere geschmacklich intensivere Öle eingesetzt werden, ggf. in Mischung.

Verfahren zur Herstellung sowohl der erfindungsgemäßen stabilen Emulsion, als auch der erfindungsgemäßen gefüllten Backware sind im Vorstehenden ausführlich beschrieben worden. Sie stellen einen weiteren Gegenstand der vorliegenden Erfindung dar. Auf obige Ausführungen wird diesbezüglich Bezug genommen. Wie oben bereits ausgeführt, erfolgt die Herstellung durch Zugabe des gewünschten Öls oder einer Mischung gewünschter Öle zu einer wie oben definierten Kräuter- und/oder Gewürzvormischung. Das Zugeben des Öls erfolgt vorzugsweise in dünnen Strahl unter konstantem Rühren der Mischung. Für den Emulgiervorgang können übliche, industriell eingesetzte Rührer verwendet werden, z.B. Schneidmesser-Rührer oder Planetenrührmaschinen.

Die erfindungsgemäße Emulsion ist eine Öl-in-Wasser-Emulsion. Die Wassermenge und die Emulgatormenge bestimmt wesentlich die Konsistenz der fertigen Emulsion und kann vom Fachmann im Rahmen der obigen Angaben entsprechend angepasst werden.

Der Einsatz einer mikrobiologisch stabilen Kräuter- oder/und Gewürz-Vormischung stellt einen wesentlichen Vorteil der vorliegenden Erfindung dar, da die weitere Verarbeitung durch Zugabe von emulgierender modifizierter Stärke und Öl dann auch ohne Beeinträchtigung der Haltbarkeit in der normalen, nicht sterilen Atmosphäre eines Bäckereibetriebes erfolgen kann. Insgesamt wird durch die vorliegende Erfindung daher erstmals ein leicht zu erzeugendes und vielfältig zu verarbeitendes veganes Füllprodukt insbesondere für Backwaren zur Verfügung gestellt, welches unter ernährungsphysiologischen, wie unter Umweltgesichtspunkten positiv zu bewerten ist.

Das folgende Beispiel zur Herstellung einer erfindungsgemäßen Emulsion zum Einbringen in ein zumindest teilweise vorgebackenes Brotprodukt soll die Erfindung weiter erläutern:
Beispiel: Herstellung einer Emulsion als Füllung und eines gefüllten Brotprodukts

Zur Herstellung einer Emulsion als Füllung für eine Backware wird eine pasteurisierte Kräuter-Gewürzvormischung hergestellt. Hierzu werden Trinkwasser, Knoblauchpaste, Knoblauchgranulat, Speisesalz, Stärke und mediterrane tiefgekühlte Kräuter in den in Tabelle 1 angegebenen Mengen vermischt. Die Kräuter-Gewürzvormischung wird auf eine Temperatur von zwischen 75 und 85°C erhitzt, bei welcher die Stärke quillt und die Mischung verdickt, so dass die einzelnen Bestandteile miteinander homogen verbunden werden. Ein Absetzen zum Beispiel der Kräuter in der Mischung wird damit verhindert.

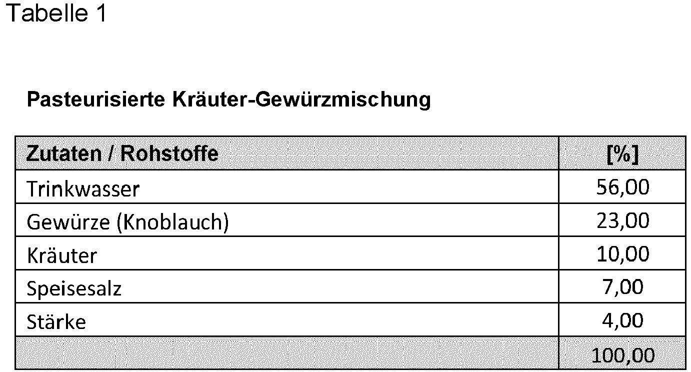

Die abgekühlte Kräuter-Gewürzvormischung wird im Folgenden mit modifizierter Wachsmaistärke (z.B. N-Creamer 2111) als emulgierende Stärke verrührt und danach unter ständigem Rühren langsam das Rapsöl und Olivenöl zudosiert und die erhaltene Emulsion mit Zitronensaftkonzentrat abgeschmeckt. Die verschiedenen Inhaltsstoffe werden in den in Tabelle 2 dargestellten Mengen eingesetzt.

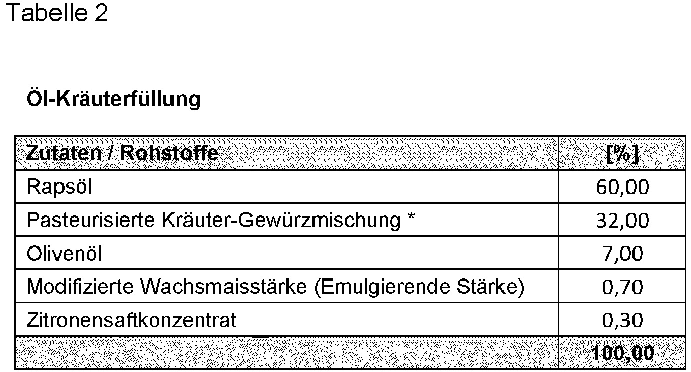

Die erhaltene Emulsion ist über mehr als 24 Stunden stabil und kann problemlos über diesen Zeitraum in die Einschnitte eines vorgeschnittenen teilweise gebackenen Baguettes eindosiert werden.

Alternativ wird die Emulsion über eine Füllvorrichtung in vorab definierten Portionen in ein ungeschnittenes teilweise gebackenes Brotprodukt eingespritzt.

Nach Fertigbacken des teilweise gebackenen Brotprodukts wird in beiden Ausgestaltungen ein geschmacklich und ästhetisch sehr ansprechendes Produkt erhalten. Bei der Verkostung ergab sich, dass die pflanzlichen Öle zu einem kleinen Teil von der Krume aufgenommen worden waren, wogegen ein weiterer Teil der Emulsion auch nach dem Aufbacken noch als erkennbare Füllung vorhanden war.

Die Erfindung umfasst und offenbart die folgenden Aspekte:
Aspekt 1: Gefüllte Backware, welche als Convenience-Produkt für die gekühlte Lagerung ausgestaltet ist, und welche erhältlich ist durch Einbringen einer Emulsion umfassend ein oder mehrere Arten von pflanzlichen Speiseölen, Wasser und Würzmitteln als Füllung in geeignete Einschnitte eines zumindest teilweise vorgebackenen Brotprodukts oder Einspritzen, vorzugsweise an mehreren Stellen, in ein ungeschnittenes zumindest teilweise vorgebackenes Brotprodukt und anschließendes Verpacken der so hergestellten Backware.
Aspekt 2: Gefüllte Backware nach Aspekt 1, dadurch gekennzeichnet, dass die Emulsion neben pflanzlichen Speiseölen, Würzmitteln und Wasser, einen oder mehrere Emulgatoren oder/und Stärke, vorzugsweise modifizierte Stärke enthält.
Aspekt 3: Gefüllte Backware nach Aspekt 1 oder 2, dadurch gekennzeichnet, dass die Würzmittel Kräuter oder/und Gewürze umfassen.
Aspekt 4: Gefüllte Backware nach einem der Aspekte 1 bis 3, dadurch gekennzeichnet, dass die Emulsion erhalten wird durch Mischen von zwischen 60 und 80 Gew.- % pflanzlicher Speiseöle mit 20 bis 40 Gew.-% einer Kräuter- oder/und Gewürz-Vormischung, welche einen Wassergehalt von 50 bis 90 Gew.-%, vorzugsweise 60 bis 85 Gew.-%, aufweist.
Aspekt 5: Gefüllte Backware nach einem der Aspekte 1 bis 4, dadurch gekennzeichnet, dass die Kräuter- oder/und Gewürz-Vormischung erhältlich ist durch Mischen von Wasser, Kräutern oder/und Gewürzen und einem Bindemittel, insbesondere Stärke, und pasteurisieren der Mischung bei 72 bis 96°C, vorzugsweise bei 75 bis 85°.C.
Aspekt 6: Gefüllte Backware nach einem der Aspekte 4 oder 5, dadurch gekennzeichnet, dass die Emulsion erhalten wird durch Zufügen von emulgierender modifizierter Stärke zu der Kräuter- oder/und Gewürz-Vormischung und anschließender langsamer Dosierung, unter intensivem Rühren, des oder der pflanzlichen Speiseöle.
Aspekt 7: Gefüllte Backware nach einem der Aspekte 1 bis 6, dadurch gekennzeichnet, dass die Emulsion als pflanzliche Speiseöle Rapsöl, Distelöl, Sonnenblumenöl, Sojaöl oder/und Olivenöl umfasst.
Aspekt 8: Gefüllte Backware nach einem der Aspekte 1 bis 7, dadurch gekennzeichnet, dass die Emulsion eine Mischung von einem oder mehreren geschmacksneutralen Speiseölen mit nativem Olivenöl umfasst.
Aspekt 9: Gefüllte Backware nach Aspekt 8, dadurch gekennzeichnet, dass die Emulsion eine Mischung von Rapsöl und nativem Olivenöl, vorzugweise in einem Verhältnis von 10:1 bis 1:1 enthält.
Aspekt 10: Gefüllte Backware nach einem der vorhergehenden Aspekte, dadurch gekennzeichnet, dass die Emulsion als Würzmittel ein oder mehrere Küchenkräuter, vorzugsweise ausgewählt aus der Gruppe umfassend Bärlauch, Basilikum, Beifuß, Bohnenkraut, Borretsch, Brunnenkresse, Dill, Estragon, Kerbel, Koriander, Kresse, Liebstöckel, Majoran, Melisse, Minze, Oregano, Petersilie, Pimpinelle, Rosmarin, Salbei, Sauerampfer, Schnittlauch, Thymian oder Ysop enthält.
Aspekt 11: Gefüllte Backware nach einem der vorhergehenden Aspekte, dadurch gekennzeichnet, dass die Emulsion als Würzmittel Knoblauch oder/und Zwiebel enthält.
Aspekt 12: Gefüllte Backware nach einem der vorhergehenden Aspekte, dadurch gekennzeichnet, dass zur Herstellung der Emulsion bzw. der Kräuter- oder/und Gewürz-Vormischung Küchenkräuter, Knoblauch oder/und Zwiebel in frischer, gefrorener, gefriergetrockneter oder getrockneter Form eingesetzt wurden.
Aspekt 13: Gefüllte Backware nach einem der vorhergehenden Aspekte, dadurch gekennzeichnet, dass die Emulsion als Würzmittel Gewürze oder/und Säuerungsmittel oder/und Aromen enthält.
Aspekt 14: Gefüllte Backware nach Aspekt 9, dadurch gekennzeichnet, dass die Gewürze ausgewählt sind aus Salz, Pfeffer, Paprika, Kümmel, Chilies, Kurkuma, Ingwer, Cayennepfeffer, Muskat, Kardamon, Kreuzkümmel, Piment.
Aspekt 15: Gefüllte Backware nach einem der vorhergehenden Aspekte, dadurch gekennzeichnet, dass die Emulsion keine Konservierungsstoffe enthält.
Aspekt 16: Gefüllte Backware nach einem der vorhergehenden Aspekte, dadurch gekennzeichnet, dass es sich bei dem Brotprodukt um ein Ciabatta, Baguette, Stangenweißbrot oder um Reihensemmeln handelt.
Aspekt 17: Gefüllte Backware nach einem der vorhergehenden Aspekte, dadurch gekennzeichnet, dass sie luftdicht verpackt ist, insbesondere unter Vakuum oder Schutzgasatmosphäre.
Aspekt 18: Gefüllte Backware nach einem der vorhergehenden Aspekte, dadurch gekennzeichnet, dass sie für eine Lagerung oder Darbietung in der Kühlung, insbesondere im Temperaturbereich von 0 bis +10°C, bevorzugt bei einer Temperatur von +4°C bis +10°C konzipiert ist.
Aspekt 19: Gefüllte Backware nach einem der vorhergehenden Aspekte, dadurch gekennzeichnet, dass sie durch ein Verfahren erhältlich ist, welches die Schritte umfasst:
   (a) Zubereitung eines Brotteiges,
   (b) Formen des Brotteiges in die gewünschte Form,
   (c) zumindest teilweises Backen des Brotteiges um ein Brotprodukt zu erhalten,
   (d) Herstellen einer Emulsion aus ein oder mehreren pflanzlichen Speiseölen und einer Kräuter- oder/und Gewürz-Vormischung mit einem Wassergehalt von 50 bis 90 Gew.-%, vorzugsweise 60 bis 85 Gew.-%,
   (e) Einbringen der Emulsion in Einschnitte im Brotprodukt oder Einspritzen der Emulsion, vorzugsweise an mehreren Stellen, in das Innere des Brotprodukts,
   (f) Verpacken der gefüllten Backware in einer vorzugsweise luftdichten Verpackung und
   (g) Kühlen des verpackten Brotes.
Aspekt 20: Stabile Emulsion aus einem oder mehreren pflanzlichen Speiseölen, Wasser und Würzmitteln, dadurch gekennzeichnet, dass die Emulsion mikrobiologisch stabil und über 12 Stunden nach Herstellung dressierbar ist, dadurch gekennzeichnet dass die Emulsion erhältlich ist durch Vermischen von 20 bis 40 Gew.-% einer Kräuter- oder/und Gewürz-Vormischung mit einem Wassergehalt von 50 bis 90 Gew.-%, vorzugsweise 60 bis 85 Gew.-%, mit einer emulgierenden Menge einer emulgierenden modifizierten Stärke und anschließendem Einrühren von 60 bis 80 Gew.-% des oder der pflanzlichen Speiseöle.
Aspekt 21: Stabile Emulsion nach Aspekt 20, dadurch gekennzeichnet, dass das Vermischen und Einrühren bei Raumtemperatur oder Kühltemperatur erfolgt.
Aspekt 22: Stabile Emulsion nach Aspekt 20 oder 21, dadurch gekennzeichnet, dass die emulgierende modifizierte Stärke in einer Menge von 0,5 bis 3 Gew.-% bezogen auf die Gesamtmenge der Emulsion eingesetzt wird.
Aspekt 23: Stabile Emulsion nach einem der Aspekte 20 bis 22, dadurch gekennzeichnet, dass sie ein oder mehrere Würzmittel ausgewählt Küchenkräutern, vorzugsweise ausgewählt aus der Gruppe umfassend Bärlauch, Basilikum, Beifuß, Bohnenkraut, Borretsch, Brunnenkresse, Dill, Estragon, Kerbel, Koriander, Kresse, Liebstöckel, Majoran, Melisse, Minze, Oregano, Petersilie, Pimpinelle, Rosmarin, Salbei, Sauerampfer, Schnittlauch, Thymian oder Ysop enthält, oder/und Knoblauch oder/und Zwiebel enthält, oder/und Gewürze, vorzugsweise Salz, Pfeffer, Paprika, Kümmel, Chilis enthält.
Aspekt 24: Stabile Emulsion nach einem der Aspekte 20 bis 23, dadurch gekennzeichnet, dass sie als pflanzliche Speiseöle Rapsöl, Distelöl, Sonnenblumenöl, Sojaöl oder/und Olivenöl umfasst, vorzugsweise eine Mischung von einem oder mehreren geschmacksneutralen Speiseölen mit nativem Olivenöl.

## Patentansprüche

1. Gefüllte Backware, welche als Convenience-Produkt für die gekühlte Lagerung ausgestaltet ist, und welche erhältlich ist durch Einbringen einer Öl-in-Wasser-Emulsion umfassend ein oder mehrere Arten von pflanzlichen Speiseölen, Wasser und Würzmitteln als Füllung in geeignete Einschnitte eines zumindest teilweise vorgebackenen Brotprodukts oder Einspritzen, vorzugsweise an mehreren Stellen, in ein ungeschnittenes zumindest teilweise vorgebackenes Brotprodukt und anschließendes Verpacken der so hergestellten Backware.

2. Gefüllte Backware nach Anspruch 1, **dadurch gekennzeichnet, dass** die Emulsion neben pflanzlichen Speiseölen, Würzmitteln, insbesondere Kräuter oder/und Gewürze und Wasser, einen oder mehrere Emulgatoren oder/und Stärke, vorzugsweise modifizierte Stärke enthält.

3. Gefüllte Backware nach einem der Ansprüche 1 oder 2, **dadurch gekennzeichnet, dass** die Emulsion erhalten wird durch Mischen von zwischen 60 und 80 Gew.- % pflanzlicher Speiseöle mit 20 bis 40 Gew.-% einer Kräuter- oder/und Gewürz-Vormischung, welche einen Wassergehalt von 50 bis 90 Gew.-%, vorzugsweise 60 bis 85 Gew.-%, aufweist.

4. Gefüllte Backware nach einem der Ansprüche 1 bis 3, **dadurch gekennzeichnet, dass** die Kräuter- oder/und Gewürz-Vormischung erhältlich ist durch Mischen von Wasser, Kräutern oder/und Gewürzen und einem Bindemittel, insbesondere Stärke, und pasteurisieren der Mischung bei 72 bis 96°C, vorzugsweise bei 75 bis 85°C.

5. Gefüllte Backware nach einem der Ansprüche 3 oder 4, **dadurch gekennzeichnet, dass** die Emulsion erhalten wird durch Zufügen von emulgierender modifizierter Stärke zu der Kräuter- oder/und Gewürz-Vormischung und anschließender langsamer Dosierung, unter intensivem Rühren, des oder der pflanzlichen Speiseöle.

6. Gefüllte Backware nach einem der Ansprüche 1 bis 5, **dadurch gekennzeichnet, dass** die Emulsion als pflanzliche Speiseöle Rapsöl, Distelöl, Sonnenblumenöl, Sojaöl oder/und Olivenöl, uns bevorzugt eine Mischung von einem oder mehreren geschmacksneutralen Speiseölen mit nativem Olivenöl, besonders bevorzugt eine Mischung von Rapsöl und nativem Olivenöl, vorzugweise in einem Verhältnis von 10:1 bis 1:1 umfasst.

7. Gefüllte Backware nach einem der vorhergehenden Ansprüche, **dadurch gekennzeichnet, dass** die Emulsion als Würzmittel ein oder mehrere Küchenkräuter, vorzugsweise ausgewählt aus der Gruppe umfassend Bärlauch, Basilikum, Beifuß, Bohnenkraut, Borretsch, Brunnenkresse, Dill, Estragon, Kerbel, Koriander, Kresse, Liebstöckel, Majoran, Melisse, Minze, Oregano, Petersilie, Pimpinelle, Rosmarin, Salbei, Sauerampfer, Schnittlauch, Thymian oder Ysop oder/und Knoblauch oder/und Zwiebel, oder/und Gewürze oder/und Säuerungsmittel oder/und Aromen enthält.

8. Gefüllte Backware nach einem der vorhergehenden Ansprüche, **dadurch gekennzeichnet, dass** zur Herstellung der Emulsion bzw. der Kräuter- oder/und Gewürz-Vormischung Küchenkräuter, Knoblauch oder/und Zwiebel in frischer, gefrorener, gefriergetrockneter oder getrockneter Form eingesetzt wurden.

9. Gefüllte Backware nach einem der vorhergehenden Ansprüche, **dadurch gekennzeichnet, dass** es sich bei dem Brotprodukt um ein Ciabatta, Baguette, Stangenweißbrot oder um Reihensemmeln handelt oder/und dass sie luftdicht verpackt ist, insbesondere unter Vakuum oder Schutzgasatmosphäre.

10. Gefüllte Backware nach einem der vorhergehenden Ansprüche, **dadurch gekennzeichnet, dass** sie für eine Lagerung oder Darbietung in der Kühlung, insbesondere im Temperaturbereich von 0 bis +10°C, bevorzugt bei einer Temperatur von +4°C bis +10°C konzipiert ist.

11. Gefüllte Backware nach einem der vorhergehenden Ansprüche, **dadurch gekennzeichnet, dass** sie durch ein Verfahren erhältlich ist, welches die Schritte umfasst:
(a) Zubereitung eines Brotteiges,
(b) Formen des Brotteiges in die gewünschte Form,
(c) zumindest teilweises Backen des Brotteiges um ein Brotprodukt zu erhalten,
(d) Herstellen einer Öl-in-Wasser-Emulsion aus ein oder mehreren pflanzlichen Speiseölen und einer Kräuter- oder/und Gewürz-Vormischung mit einem Wassergehalt von 50 bis 90 Gew.-%, vorzugsweise 60 bis 85 Gew.-%,
(e) Einbringen der Emulsion in Einschnitte im Brotprodukt oder Einspritzen der Emulsion, vorzugsweise an mehreren Stellen, in das Innere des Brotprodukts, gegebenenfalls weiter
(f) Verpacken der gefüllten Backware in einer vorzugsweise luftdichten Verpackung und bevorzugt
(g) Kühlen des verpackten Brotes.

12. Stabile Öl-in-Wasser-Emulsion aus einem oder mehreren pflanzlichen Speiseölen, Wasser und Würzmitteln, **dadurch gekennzeichnet, dass** die Emulsion mikrobiologisch stabil und über 12 Stunden nach Herstellung dressierbar ist, **dadurch gekennzeichnet dass** die Emulsion erhältlich ist durch Vermischen von 20 bis 40 Gew.-% einer Kräuter- oder/und Gewürz-Vormischung mit einem Wassergehalt von 50 bis 90 Gew.-%, vorzugsweise 60 bis 85 Gew.-%, mit einer emulgierenden Menge einer emulgierenden modifizierten Stärke und anschließendem Einrühren von 60 bis 80 Gew.-% des oder der pflanzlichen Speiseöle, wobei vorzugsweise das Vermischen und Einrühren bei Raumtemperatur oder Kühltemperatur erfolgt.

13. Stabile Emulsion nach Anspruch 20 oder 21, **dadurch gekennzeichnet, dass** die emulgierende modifizierte Stärke in einer Menge von 0,3 bis 3 Gew.-% bezogen auf die Gesamtmenge der Emulsion eingesetzt wird.

14. Stabile Emulsion nach einem der Ansprüche 20 bis 22, **dadurch gekennzeichnet, dass** sie ein oder mehrere Würzmittel ausgewählt Küchenkräutern, vorzugsweise ausgewählt aus der Gruppe umfassend Bärlauch, Basilikum, Beifuß, Bohnenkraut, Borretsch, Brunnenkresse, Dill, Estragon, Kerbel, Koriander, Kresse, Liebstöckel, Majoran, Melisse, Minze, Oregano, Petersilie, Pimpinelle, Rosmarin, Salbei, Sauerampfer, Schnittlauch, Thymian oder Ysop enthält, oder/und Knoblauch oder/und Zwiebel enthält, oder/und Gewürze, vorzugsweise Salz, Pfeffer, Paprika, Kümmel, Chilis enthält oder/und dass sie als pflanzliche Speiseöle Rapsöl, Distelöl, Sonnenblumenöl, Sojaöl oder/und Olivenöl umfasst, vorzugsweise eine Mischung von einem oder mehreren geschmacksneutralen Speiseölen mit nativem Olivenöl .

15. Verfahren zur Herstellung einer stabilen Emulsion aus einem oder mehreren pflanzlichen Speiseölen, Wasser und Würzmittel, **dadurch gekennzeichnet, dass** 20 bis 40 Gew.-% einer Kräuter- und/oder Gewürz-Vormischung mit einem Wassergehalt von 50 bis 90 Gew.-%, vorzugsweise 60 bis 85 Gew.-%, mit einer emulgierenden Menge einer emulgierenden modifizierten Stärke vermischt werden und anschließend 60 bis 80 Gew.-% eines pflanzlichen Speiseöls unter Bildung einer stabilen Emulsion eingerührt werden.
